# EUROPÄISCHE PATENTSCHRIFT

(11) **EP 2 805 847 B1**
(45) Veröffentlichungstag und Bekanntmachung des Hinweises auf die Patenterteilung: **08.07.2015**
(21) Anmeldenummer: 13002679.2
(22) Anmeldetag: 22.05.2013
(51) Int. Cl.: B60M 1/18

(54) **Vorrichtung mit zwei starren Stromschienen und einem Streckentrenner**
Device with two rigid conductor rails and a section isolator
Dispositif avec deux rails conducteurs fixes et un séparateur de voies

(43) Veröffentlichungstag der Anmeldung: 26.11.2014
(73) Patentinhaber: Furrer + Frey AG, 3000 Bern 6 (CH)
(72) Erfinder: Furrer, Beat, 3012 Bern (CH); Röthlisberger, Beat, 3072 Ostermundigen (CH); Casali, Bruno, 3125 Toffen (CH)
(74) Vertreter: von Bülow, Tam

(56) Entgegenhaltungen:
- EP-B1- 0 052 176
- EP-B1- 0 592 819
- DE-B4-102010 051 379
- FR-A5- 2 140 934
- JP-A- 2004 314 914

## Beschreibung

Die Erfindung bezieht sich auf eine Vorrichtung mit zwei starren Stromschienen und einem Streckentrenner gemäß dem Oberbegriff des Patentanspruches 1.

Eine solche Vorrichtung ist aus der DE 10 2010 051 379 B4 bekannt. Zwei linienflüchtige starre Stromschienen bilden mit dem Streckentrenner ein geschlossenes System, dadurch, dass in Verlängerung jeder Stromschiene eine Leitkufe und eine damit starr verbundene Isolierkufe mit der gegenüberliegenden Stromschiene verbunden ist. Alle Kufen liegen mit ihrer zur Fahrebene weisenden Unterseite in einer Schleifebene. Weiter sind alle Kufen relativ zu den Stromschienen höhenverstellbar. In der Praxis kommt es vor, dass sich die gegenüberliegenden Stromschienen verformen, beispielsweise durch thermische Einflüsse, was den Streckentrenner ebenfalls verformen kann, so dass dessen Leitkufen und Isolierkufen nicht mehr korrekt in einer zur Fahrebene parallelen Ebene liegen. Dies bedingt ein aufwändiges Nachjustieren und kann zu Schwingungen der Streckentrenner und damit auch zu einer Funkenbildung führen.

Die WO 99/03700 zeigt zwei linienflüchtige starre Stromschienen, deren gegenüberliegende Enden einen ersten Abstand zueinander haben. An diese Enden ist jeweils eine elektrisch leitende Kufe angeschlossen, wobei die beiden Kufen in den ersten Abstand hineinragen, im wesentlichen in einem zweiten Abstand zueinander antiparallel verlaufen, wobei dieser zweite Abstand so gewählt ist, dass bei der Betriebsspannung der Stromschienen eine sichere galvanische Trennung gewährleistet ist, was auch bedeutet, dass keine Funkenüberschläge zwischen den Kufen stattfinden können. Die elektrisch leitfähigen Kufen und die angrenzenden Stromschienen liegen zumindest mit ihrer Unterseite, die zur Fahrebene weist, in einer Ebene, die als Schleifebene bezeichnet wird. Bezogen auf die Fahrtrichtung, d.h. die Längsachse der Stromschienen überschneiden sich die beiden elektrisch leitenden Kufen, so dass der Stromabnehmer eines Fahrzeuges beim Vorbeifahren an dem Streckentrenner immer mit mindestens einer der Kufen in elektrischen Kontakt steht und diese beschleift.

Die bekannten Kufen verlaufen schräg in Bezug auf die Längsachsen der Stromschienen und haben ein freies, unbefestigtes Ende, das in Richtung zur jeweils gegenüberliegenden Stromschiene weist. Insoweit handelt es sich um ein offenes System. Weiter sind die freien Enden der elektrisch leitfähigen Kufen jeweils nach oben von der Fahrebene weggebogen, um einen sanften Einlauf des Stromabnehmers eines Fahrzeuges zu erreichen und ein "Einfädeln" des Stromabnehmers oder einen Stoß beim Anfahren des freien Endes der Kufe zu vermeiden.

Die EP 0 052 176 B1 zeigt einen Streckentrenner für an Kettentragwerken aufgehängte Fahrdrähte, deren gegenüberliegende Enden einen Abstand zueinander haben. Die beiden Enden der Fahrdrähte sind über parallel zueinander verlaufende Isolierleisten miteinander verbunden, die vom Stromabnehmer eines vorbeifahrenden Fahrzeuges beschliffen werden. An den Enden der beiden Fahrdrähte ist noch ein Funkenhorn angebracht. Im Übergangsbereich zwischen den beiden Fahrdrähten beschleift die Schleifleiste des Fahrzeuges nur die Isolierleisten, so dass das Fahrzeug keine Stromversorgung hat. Aufgrund der Induktivität der Elektromotoren des Fahrzeuges können hohe Spannungsspitzen entstehen, weshalb die Funkenhörner vorgesehen sind. Gleichwohl ist die Funkenbildung aus den oben geschilderten Gründen unerwünscht.

Die EP 0 592 819 B1 zeigt einen Streckentrenner für an Kettentragwerken aufgehängte Fahrdrähte, deren gegenüberliegende Enden durch elektrisch isolierende Kufen miteinander verbunden sind. An beide Enden der Fahrdrähte sind Lichtbogenhörner mit Auflaufkufen befestigt, die in einen ersten Abstand zwischen den beiden Fahrdrähten hineinragen und zueinander einen zweiten Abstand aufweisen. An eines der beiden Lichtbogenhörner sind elektrisch leitfähige Kufen angeschlossen, die parallel zu den Isolierkufen verlaufen und so weit in Richtung des gegenüberliegenden Lichtbogenhornes verlaufen, dass die Trennstelle zwischen den beiden gegenüberliegenden Leitkufen hinreichend gut überbrückt wird. Die zur Fahrebene weisenden Unterseiten der Ablaufkufen, der Isolierkufen und der Leitkufen sollen dort exakt in einer Ebene liegen und vorzugsweise selber flach ausgebildet sein. Zusätzlich sollen die beiden Isolierkufen noch einen Lichtbogenschutz haben, so dass insgesamt sieben Elemente, nämlich zwei Leitkufen, zwei Isolierkufen, zwei Lichtbogenschutzeinrichtungen und eine Ablaufkufe von dem Stromabnehmer beschliffen werden sollen. Problematisch ist es allerdings, sieben Elemente exakt in einer Ebene auszurichten. Auch können durch unterschiedlichen Verschleiß, wie z.B. Abrieb oder Abbrand die einzelnen Elemente unterschiedlich stark abgenutzt werden, so dass es wiederum zu Luftspalten und damit Funkenbildung zwischen Schleifleiste und den elektrisch leitfähigen Kufen kommt.

Die JP 60234034 A zeigt einen Streckentrenner für an Kettentragwerken aufgehängte Fahrdrähte, deren Enden im Bereich des Streckentrenners seitlich gegenläufig ausgelenkt sind und antiparallel im Abstand zueinander verlaufen. Die freien Enden der Fahrdrähte sind über einen Isolator mit dem jeweils anderen Fahrdraht verbunden. Weiter sind die Fahrdrähte im Bereich des Streckentrenners aus der Fahrebene heraus nach oben abgebogen, so dass sie sich in Seitenansicht kreuzen. Die Schleifleiste eines vorbeifahrenden Fahrzeuges muss der Höhenänderung folgen, wenn ein stetiger Kontakt zum Fahrdraht beibehalten werden soll, was bei höheren Geschwindigkeiten nicht möglich ist. Somit treten ebenfalls die eingangs geschilderten Probleme auf.

Die DE 28 37 370 A1 zeigt eine Verbindungsvorrichtung für elektrische Fahrdrähte, die über Hänger an einem Tragseil aufgehängt sind. Auch hier ist für einen Streckentrenner der jeweilige Fahrdraht in eine Leitkufe und eine Isolierkufe aufgeteilt, wobei diese durch einen quer zu Längserstreckung des Fahrdrahtes verlaufenden Isolator im Abstand zueinander gehalten werden und der Isolator über Hänger an dem Tragseil befestigt ist.

Die DE 11 63 894 B zeigt einen ähnlichen Streckentrenner, bei dem ebenfalls ein quer zu Längserstrekkung des Fahrdrahtes angeordneter Isolator die jeweiligen Zweige trennt.

Die FR 2 140 934 A5 zeigt ebenfalls einen Streckentrenner mit in jeweils eine Leitkufe und eine Isolierkufe aufgespreizten Fahrdrähten.

Aufgabe der vorliegenden Erfindung ist es, den Strekkentrenner der eingangs genannten Art dahingehend weiter zu verbessern, dass er bei starren Stromschienen einen stetigen Kontakt zwischen Stromabnehmer und Fahrdraht gewährleistet und die Probleme der Funkenbildung vermieden werden. Dies beinhaltet alle eingangs genannten Probleme, die zu einer Funkenbildung führen können. Auch sollen die sich gegenüberliegenden Stromschienen dem Streckentrenner keine innere Verformung aufzwingen können.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Der Streckentrenner nach der Erfindung hat an jeder der gegenüberliegenden Enden der starren Stromschienen
- eine Leitkufen
- eine Rampe und
- eine Isolierkufe,
die gegenüber einer Längsmittelachse der Stromschienen spiegelsymmetrisch angeordnet sind und in einen ersten Abstand hineinragen. Beide Stromschienen sind durch den ersten Abstand überbrückende geradlinige Isolierprofile starr miteinander verbunden. Die Isolierkufen sind an den Isolierprofilen befestigt und verlaufen und einem spitzen Winkel zu den Isolierprofilen. Die Leitkufen sind mit einem Ende elektrisch und mechanisch mit der zugeordneten Stromschiene verbunden und mit ihrem anderen Ende mit der Rampe. Dabei sind die Leitkufen ausgehend von der Stromschiene in einem ersten Abschnitt in Längsrichtung der Stromschiene und in einem zweiten Abschnitt schräg nach außen verlaufend geformt, wobei sie mit ihrem anderen Ende mit einem ersten Ende der Rampe verbunden sind. Das andere Ende der Rampe ist mit der Stromschiene verbunden.

Hierdurch ist der Streckentrenner steifer ausgeführt als die Stromschiene selbst. Die Stromschiene kann damit dem Streckentrenner keine innere Verformung mehr aufzwingen. Ein weiterer Vorteil liegt darin, dass der Luftspalt zwischen den Leitkufen und den Isolierkufen vergrößert ist und somit die Isolationsstrecke verbessert ist.

Im folgenden wird die Erfindung anhand eines Ausführungsbeispieles im Zusammenhang mit der Zeichnung ausführlicher erläutert. Es zeigt:
- Fig. 1: eine Ansicht der Oberseite des Streckentrenners nach der Erfindung;
- Fig. 2: eine Seitenansicht des Streckentrenners der Fig. 1;
- Fig. 3: eine Ansicht der zur Fahrebene weisenden Unterseite des Streckentrenners nach der Erfindung;
- Fig. 4: eine perspektivische Ansicht des Streckentrenners nach der Erfindung;
- Fig. 5: einen Schnitt längs der Linie A-A der Fig. 3;
- Fig. 6: einen Schnitt längs der Linie Buchstabe B-B der Fig. 2;
- Fig. 7: eine Stirnansicht des Streckentrenners;
- Fig. 8: einen Schnitt längs der Linie C-C der Fig. 1; und
- Fig. 9: eine perspektivische Ansicht einer Leitkufe.

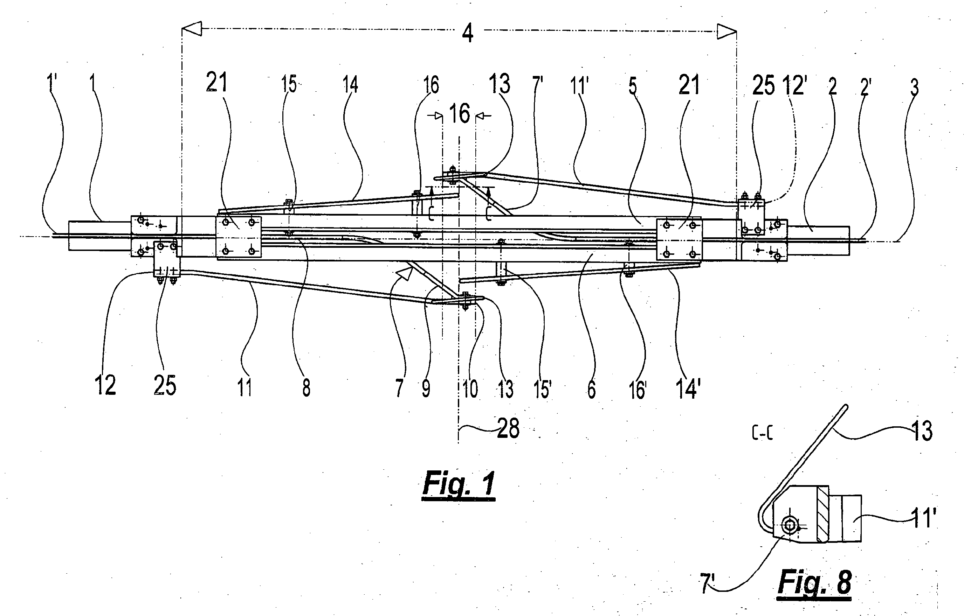

In der Ansicht der Fig. 1 sind zwei starre Stromschienen 1 und 2 zu sehen, die linienflüchtig längs einer Mittelachse 3 angeordnet sind und jeweils einen Fahrdraht 1', 2' halten. Aufeinander zu weisende Enden der Stromschienen 1 und 2 sind in einem Abstand 4 zueinander angeordnet, der von dem Streckentrenner der Erfindung überbrückt wird. Der Streckentrenner hat hier 2 starre Isolierprofile 5 und 6, die mit den Enden der beiden Stromschienen 1 und 2 starr verbunden sind und parallel zur Mittelachse 3 verlaufen, wobei zwischen ihnen einen Abstand vorhanden ist.

Mit der ersten Stromschiene 1 ist eine erste Leitkufe 7 elektrisch verbunden, die mit einem ersten Abschnitt 8 zwischen den beiden Isolierprofilen 5 und 6 längs der Mittelachse 3 verläuft und mit einem zweiten Abschnitt 9 unter einem Winkel schräg nach außen verläuft, wobei der zweite Abschnitt 9 in der Draufsicht der Fig. 1 das Isolierprofil 6 kreuzt. Ein freies Ende 10 der Leitkufe 7 ist mit einer elektrisch leitfähigen Rampe 11 verbunden, deren anderes Ende 12 elektrisch und mechanisch mit der ersten Stromschiene 1 verbunden ist. Die Rampe 11 verläuft somit unter einem spitzen Winkel zur Mittelachse 3. Am freien Ende 10 der Leitkufe 7 ist noch ein Funkenhorn 13 angebracht.

Die Befestigungspunkte der Leitkufe 7 und der Rampe 11 sind in Längsrichtung der Mittelachse 3 gegeneinander versetzt angeordnet, so dass die Befestigungspunkte und der gemeinsame Verbindungspunkt am freien Ende 10 der Leitkufe 7 in der Draufsicht ein Dreieck aufspannen, das zusammen mit der Dimensionierung der biegesteifen Leitkufe 7 und der ebenfalls biegesteifen Rampe 11 für ausreichende Stabilität sorgt.

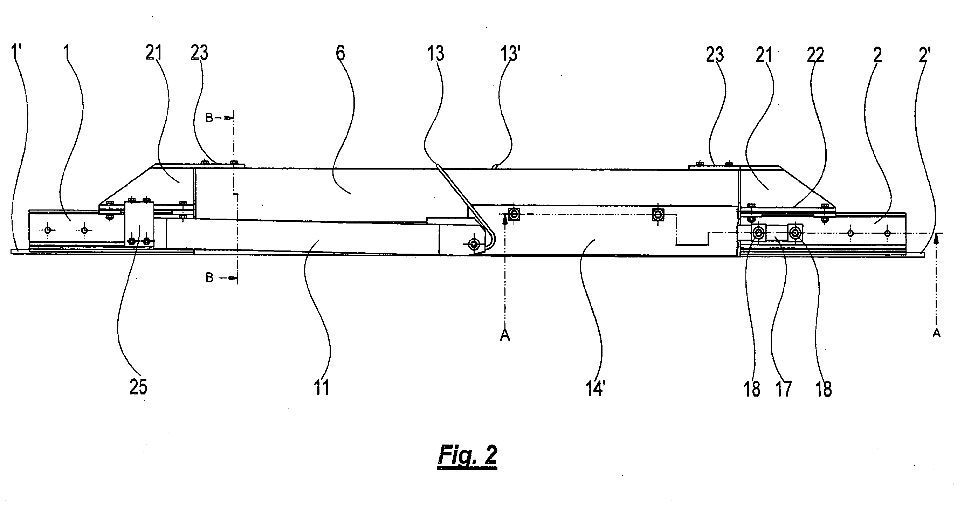

Auf den Leitkufen 7 und der Rampe 11 gegenüberliegenden Seite der Mittelachse 3 ist an dem Isolierprofil 5 eine Isolierkufe 14 befestigt, die über unterschiedlich lange Distanzstücke 15 und 16 seitlich abgespreizt ist, so dass auch die Isolierkufe 14 unter einem spitzen Winkel zur Mittelachse 3 verläuft. Die zur Fahrebene weisenden Unterseiten der Leitkufe 7, der Rampe 11 und der Isolierkufe 14 liegen im wesentlichen in einer Ebene, wobei allerdings die Rampe 11 in Längsrichtung der Mittelachse 3 leicht geneigt ist, was aus Fig. 2 zu erkennen ist.

An der zweiten Stromschiene 2 sind in analoger Weise ebenfalls eine Leitkufe 7', eine Rampe 11' und eine Isolierkufe 14' befestigt, wobei deren Anordnung spiegelsymmetrisch zur Mittelachse 3 und spiegelsymmetrisch zu einer vertikalen Mittelebene 28 ist. Diese Mittelebene 28 steht senkrecht zur Schleifebene und senkrecht zur Längsmittelachse 3.

Diese Elemente 7,11 und 14 sowie 7', 11' und 14' weisen aufeinander zu und überbrücken den Abstand 4, wobei sich ihre aufeinander zuweisenden Enden in einem Überlappungsbereich 16 überlappen, so dass eine Schleifleiste eines Pantografen eines vorbeifahrenden Fahrzeuges stets mit mindestens einer der beiden Leitkufen 7 und 7' in Kontakt steht und in dem Überlappungsbereich 16 mit beiden Leitkufen 7 und 7'. Auch die beiden Isolierkufen 14 und 14' ragen teilweise in den Überlappungsbereich 16 hinein, so dass die Schleifleiste des Pantografen auch in diesem Bereich einwandfrei geführt ist.

Die elektrische Verbindung zwischen der Stromschiene 1,2 und der ihr zugeordneten Leitkufe 11, 11' erfolgt durch einen Verbindungsbügel 17, der mit Schrauben 18 an der zugeordneten Stromschiene befestigt ist und über das Ende der jeweiligen Stromschiene in den Abstand 4 hineinragt, wo er mit der zugeordneten Leitkufe 7, 7' über eine Schraube 19 und eine Distanzhülse 20 verbunden ist. Die Distanzhülse 20 ist so dimensioniert, dass der erste Abschnitt 8, 8' der Leitkufe 7, 7' mittig zur Mittellinie 3 liegt, so dass der jeweilige Fahrdraht 1', 2' mit der zugeordneten Leitschiene 1,2 fluchtet.

Die mechanische Verbindungen zwischen den Stromschienen 1 und 2 und den Isolierprofilen 5 und 6 erfolgt über Profile, die hier als Doppel-T-Profile 21 ausgebildet sind und die an der Stromschiene 1 bzw. 2 angeschraubt sind. Beim hier dargestellten Ausführungsbeispiel ist ein unterer horizontaler Schenkel 22 des Doppel-T-Profils 21 an der Oberseite der Stromschiene 1,2 angeschraubt. Bei Verwendung eines anderen Profiles der Stromschienen kann die Befestigung an anderer Stelle und in anderer Weise erfolgen.

Ein oberer horizontaler Schenkel 23 des Doppel-T-Profils 21 ist mit den beiden Isolierprofilen 5 und 6 verbunden und zwar ebenfalls verschraubt. Die beiden horizontalen Schenkel 22 und 23 des Doppel-T-Profils 21 sind durch einen vertikalen Schenkel 24 miteinander verbunden, wobei der vertikale Schenkel 24 abgeschrägt ist, so dass der obere horizontale Schenkel 23 kürzer ist als der untere horizontale Schenkel 22.

Durch diese Verbindung der beiden Stromschienen 1 und 2 über die Doppel-T-Profile und die Isolierprofile 5 und 6 erhält man eine sehr stabile Konstruktion, bei der der Streckentrenner im Ergebnis steifer ausgeführt ist als die Stromschiene selbst. Damit kann die Stromschiene dem Streckentrenner keine innere Verformung mehr aufzwingen.

Die Befestigung der elektrisch leitfähigen Rampen 11 und 11' erfolgt über L-förmige Bügel 25, die an dem unteren horizontalen Schenkel 22 des Doppel -T- Profils 21 angeschraubt sind, wobei die Rampen 11, 11' an einem vertikalen Schenkel der Bügel 25 angeschraubt sind. Wie aus Fig. 2 zu erkennen ist, sind die elektrisch leitfähigen Rampen 11 und 12, ausgehend von der jeweiligen Stromschiene leicht nach unten geneigt, um für einen Stromabnehmer beim Vorbeifahren einen sanften Einlauf zu gewährleisten.

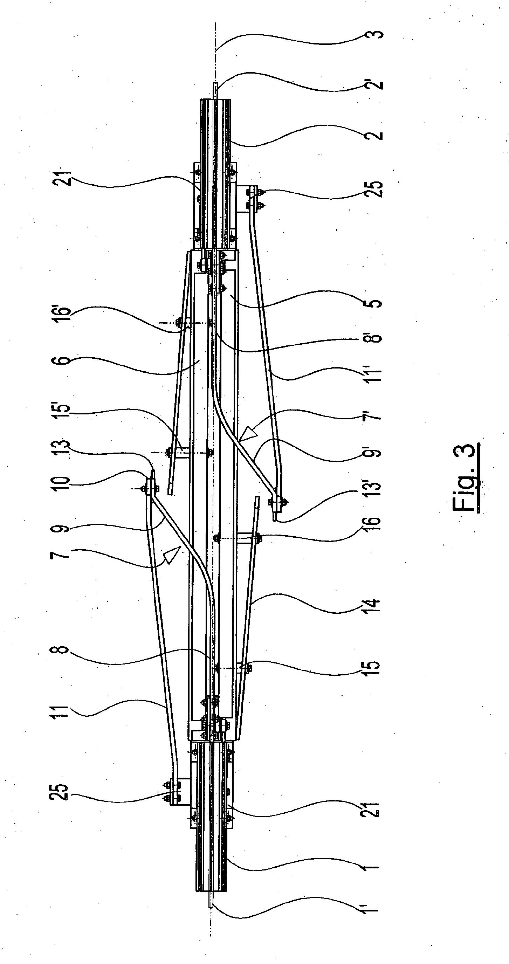

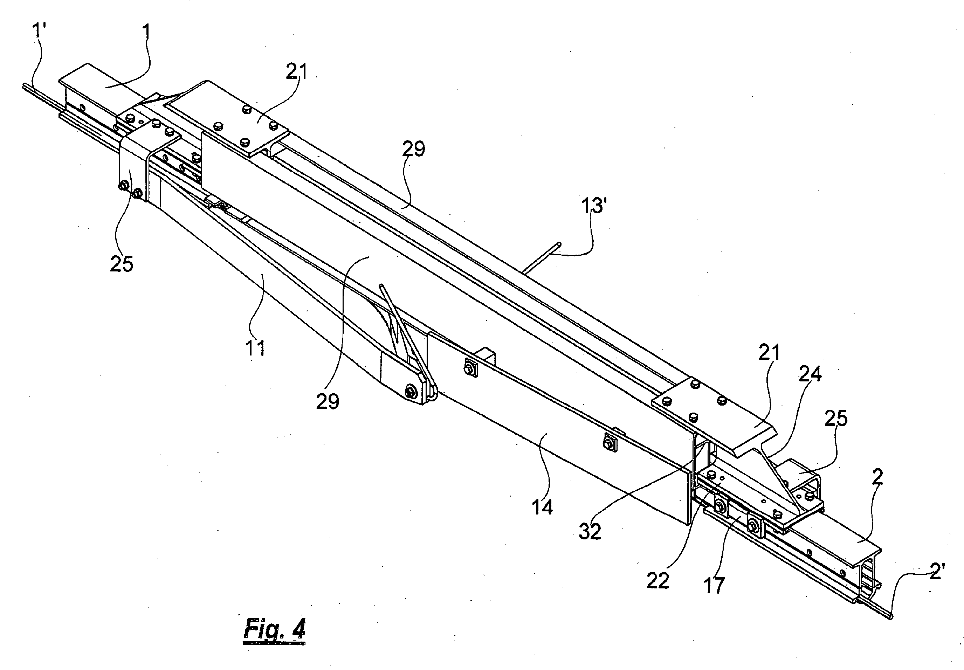

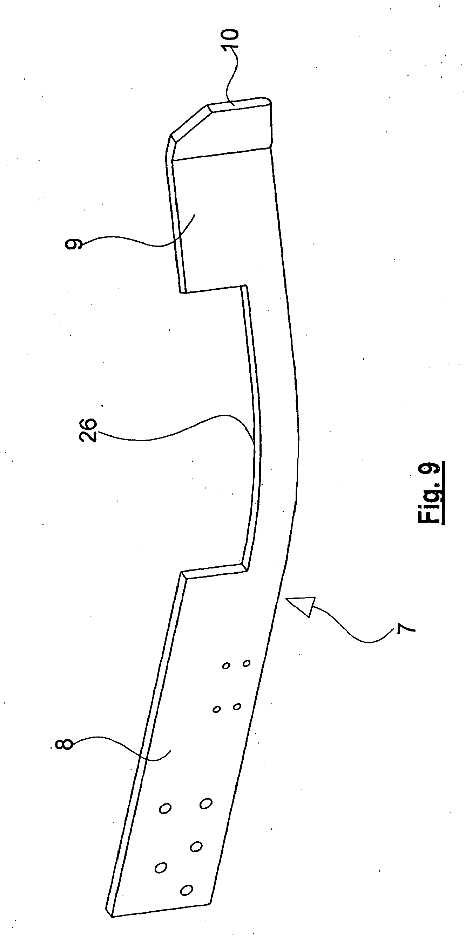

Figur 3 zeigt eine Ansicht der zur Fahrebene weisenden Unterseite des Streckentrenners, also der "Schleifebene". Man erkennt hier besser, wie die Leitkufen 7 und 7' in Verlängerung der zugeordneten Stromschiene 1, 2 zunächst geradlinig in einem ersten Abschnitt 8, 8' zwischen den Profilen 5 und 6 verlaufen und dann mit einer Biegung im einem zweiten Abschnitt 9, 9' nach außen abgewinkelt sind, bis ihr freies Ende 10 mit der zugeordneten Rampe 11, 11' und dem Funkenhorn 13, 13' verbunden ist. Dabei kreuzt die Leitkufe 7, 7' eines der Profile 5 oder 6 und hat, wie in Figur 9 deutlicher dargestellt ist, eine Aussparung 26, die teilweise auch in der perspektivischen Ansicht der Figur 4 zu erkennen ist.

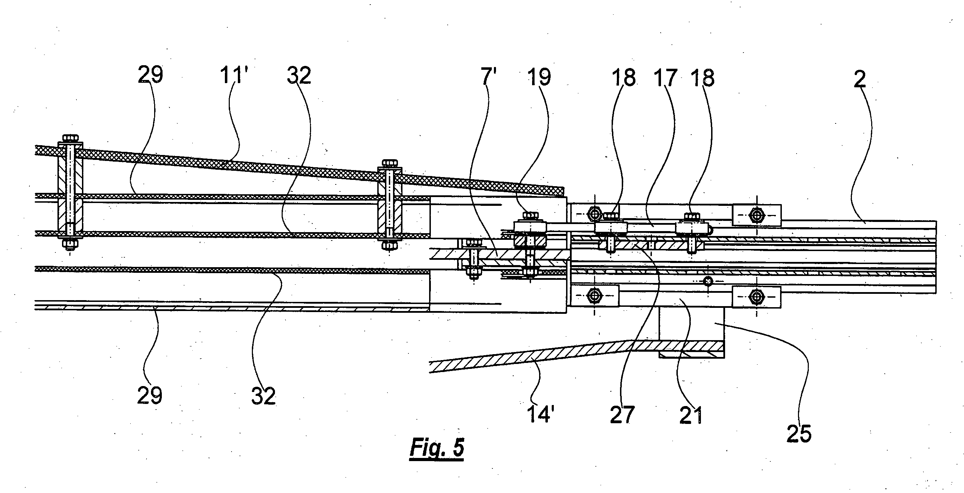

Figur 5 zeigt einen Schnitt längs der Linie A-A der Figur 2. Man sieht hier besser die Verbindung der Leitkufe 7' mit der Stromschiene 2 über den Verbindungsbügel 17, der in elektrisch gut leitender Verbindung und mechanisch fester Halterung erfolgt. Der Verbindungsbügel 17 ist über zwei Schrauben 18 an der Stromschiene 2 angeschraubt, wobei auf der Innenseite der Stromschiene 2 eine Gegenplatte 27 angebracht ist, in die die Schrauben 18 eingeschraubt werden. Der Verbindungsbügel 17 erstreckt sich über das Ende der Stromschiene 2 hinaus und ist über eine Distanzhülse und eine Schraube 19 mit der Leitkufe 7' verbunden.

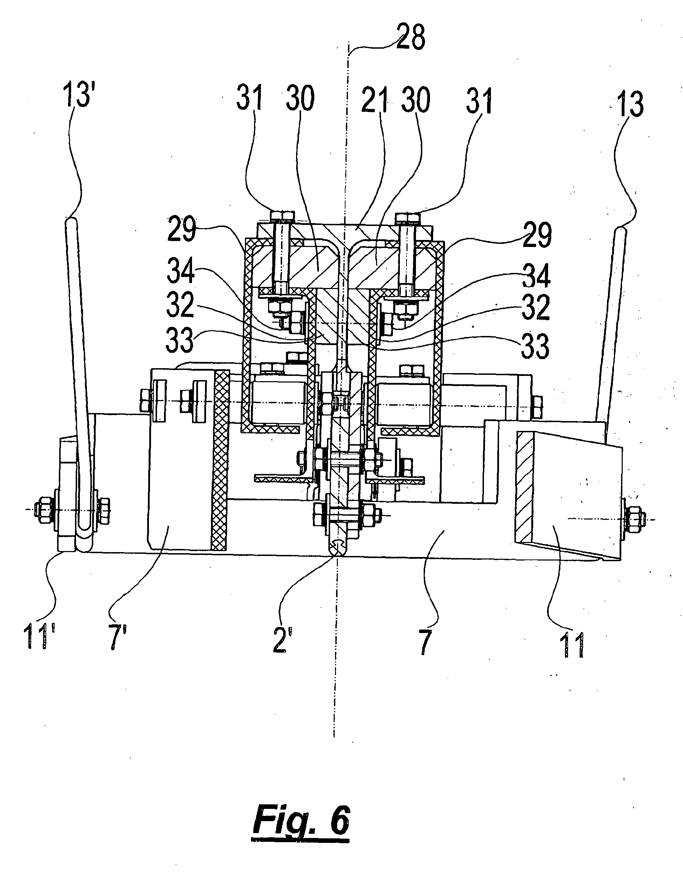

Figur 6 zeigt einen Schnitt längs der Linie B-B der Figur 2. An dem Doppel-T-Profil 21 ist spiegelsymmetrisch zu einer vertikalen Mittelebene 28 ein erstes äußeres Chassis 29 aus elektrisch isolierendem Material wie z.B. glasfaserverstärktem Kunststoff angebracht, das im Querschnitt U-förmig ist. Beidseitig des vertikalen Schenkels 24 des Doppel-T-Profils 21 sind im Wesentlichen rechteckige Distanzstücke 30 angeordnet, die mit Schrauben 31 an dem oberen horizontalen Schenkel 23 des Doppel-T-Profils 21 befestigt sind, wobei ein horizontaler Schenkel des ersten Chassis 29 eingespannt ist. Die Distanzstücke 30 sind dabei in Längsrichtung relativ kurz und dienen lediglich dazu, die Chassis-Elemente an dem Doppel-T-Träger 21 zu befestigen. In Richtung zu dem Abstand 4 verlaufen sie etwa nur über die Länge des Doppel-T-Trägers 21.

An der zur Fahrebene weisenden Unterseite der Distanzstücke 30 sind zweite Chassis-Elemente 32 aus elektrisch isolierendem Material wie z.B. glasfaserverstärktem Kunststoff angebracht, die über die Schrauben 31 mit den Distanzstücken 30 verbunden sind. Unmittelbar angrenzend an die Distanzstücke 30 sind weitere Distanzstücke 33 angebracht, die durch eine Schraube 34 gegen den vertikalen Schenkel 24 des Doppel-T-Profils 21 verschraubt sind und dabei vertikale Schenkel des zweiten Chassis 32 durchdringen. Auch die weiteren Distanzstücke 33 sind in Längsrichtung relativ kurz und erstrecken sich nur bis zu dem zum Abstand 4 hinweisenden Ende des Doppel-T-Trägers 21. Die Distanzstücke 30 und 33 sind dabei so dimensioniert, dass sie die Chassis-Elemente 29 und 32 weitestgehend starr und verwindungssteif mechanisch mit den Doppel-T-Profilen 21 verbinden.

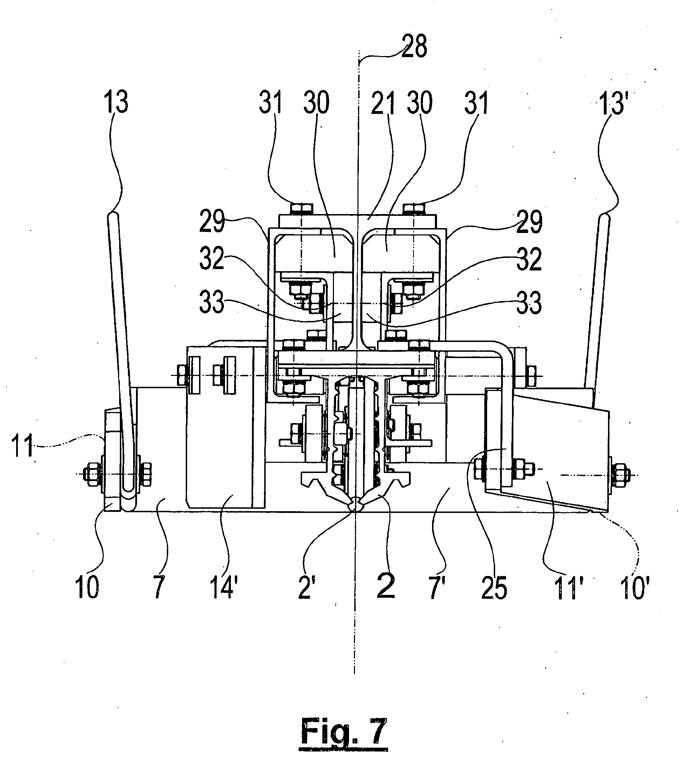

Figur 7 zeigt eine Stirnansicht des Streckentrenners einschließlich einer zu dem Streckentrenner führenden Stromschiene 2, in die der Fahrdraht 2' eingespannt ist. Im Gegensatz zu der Schnittdarstellung der Figur 6 ist also hier die Stromschiene 2 noch zu sehen, auf die das Doppel-T-Profil 21 aufgeschraubt ist. Weiter sieht man die Stirnseite der Distanzstücke 30 und 33, an die die Chassis-Elemente 29 und 32 angeschraubt sind. Die Chassis-Elemente 29 und 32 bilden jeweils als Paar eines der Isolierprofile 5 und 6, die in Figur 1 gezeigt sind. Sie sind, wie am besten aus Figur 6 durch die Schraffur zu erkennen ist, jeweils zwei ineinander verschachtelte U-förmige Profile. Weiter sieht man den L-förmigen Bügel 25, an den die Rampe 11' angeschlossen ist, deren freies Ende 10' mit dem freien Ende der Leitkufe 7' verbunden ist, deren anderes Ende bis zur Mittelebene 28 reicht. Alle übrigen Teile wurden im Zusammenhang mit der Schnittansicht der Figur 6 schon erläutert.

Figur 8 zeigt einen Schnitt längs der Linie C-C der Figur 1 auf das Ende der Leitkufe 7', der Rampe 11' und das Funkenhorn 13'. Die Leitkufe 7' ist dabei geschnitten.

Figur 9 zeigt eine perspektivische Ansicht einer Leitkufe mit den beiden Abschnitten 8 und 9 sowie der Aussparung 26. Die Leitkufe und auch die Rampen sind bezüglich ihrer Profilhöhe und damit des Biegewiderstandes sehr stark ausgebildet, so dass sie sich bei dem möglichen Anpressdruck eines Stromabnehmers, der maximal 25 - 30 kp beträgt, auch bei Geschwindigkeiten um 250 km/h kaum verformen können.

Weiter sei noch erwähnt, dass die den Streckentrennern zugefügten Rampen und Leitkufen den Zweck haben, zu verhindern, dass die Schleifleiste eines Stromabnehmers in ein "Loch" fallen kann, weil mit dieser Anordnung sichergestellt ist, dass die Schleifleiste immer an einer Leitkufe und einer Rampe gleitet. Der zusätzliche Abstand zwischen der Isolierkufe und der Leitkufe, also beispielsweise zwischen Leitkufe 7 und Isolierkufe 14' sowie zwischen Leitkufe 7' und Isolierkufe 14, ist aus elektrischen Gründen vorgesehen. Der dort zwischen diesen Elementen im Überlappungsbereich vorhandene Luftspalt führt zu einer Verbesserung der elektrischen Trennung und damit zu einer weiteren Verbesserung des Streckentrenners. So kann auch beispielsweise bei Feuchtigkeit oder Nässe kein Kriechstrom von den Leitkufen über die Isolierkufen laufen, was bei einer starren Verbindung möglich wäre, womit dann eine zu Wartungszwecken abgeschaltete Strecke trotzdem noch unter Spannung stehen könnte. Dadurch, dass die Befestigungspunkte von Leitkufe an dem Doppel-T-Profil 21, der Rampe an der Stromschiene 1 und deren gemeinsamer Verbindungspunkt am freien Ende 10 der Leitkufe 7 ein Dreieck bilden, ist bei den verwendeten biegesteifen Profilen auch eine ausreichende Stabilität gewährleistet.

Figur 9 zeigt eine perspektivische Ansicht einer Leitkufe mit den beiden Abschnitten 8 und 9 sowie der Aussparung 26.

## Patentansprüche

1. Vorrichtung mit zwei starren Stromschienen und einem Streckentrenner, wobei gegenüberliegende Enden der Stromschienen einen ersten Abstand (4) zueinander haben, welcher Abstand (4) durch den Streckentrenner überbrückt ist, wobei jede Stromschiene (1, 2) direkt oder indirekt mit
einer Leitkufe (7, 7'), einer Rampe (11, 11') und einer Isolierkufe (14, 14') verbunden ist, die in den Abstand (4) hineinragen und gegenüber einer Längsmittelachse (3) der Stromschienen (1, 2) und gegenüber einer vertikalen Querebene spiegelsymmetrisch angeordnet sind,
wobei beide Stromschienen (1, 2) durch den ersten Abstand (4) überbrückende geradlinige Isolierprofile (5, 6) starr miteinander verbunden sind,
**dadurch gekennzeichnet,**
**dass** die Isolierkufen (14, 14') an den Isolierprofilen befestigt sind und unter einem spitzen Winkel zur Längsmittelachse (3) verlaufen,
**dass** die Leitkufen (7, 7') mit einem Ende elektrisch und mechanisch mit der zugeordneten Stromschiene (1, 2) verbunden sind und mit ihrem anderen Ende mit der zugeordneten Rampe (11, 11'),
**dass** die Leitkufen (7, 7') ausgehend von der zugeordneten Stromschiene (1, 2) in einem ersten Abschnitt (8) in Längsrichtung der Stromschienen (1, 2) und in einem zweiten Abschnitt (9) schräg nach außen verlaufen und ihr freies Ende (10) mit einem ersten freien Ende der zugeordneten Rampe (11, 11') verbunden ist, und
**dass** ein zweites Ende der Rampe (11, 11') mit der zugeordneten Stromschiene (1, 2) verbunden ist.

2. Vorrichtung nach Anspruch 1, **dadurch gekennzeichnet, dass** die Leitkufen (7, 7') und die Rampen (11, 11') in Richtung der Längsmittelachse (3) sich in einem Überlappungsbereich (16) überlappen, wobei die Isolierkufen (14, 14') in den Überlappungsbereich (16) hineinragen.

3. Vorrichtung nach Anspruch 1 oder 2, **dadurch gekennzeichnet, dass** die Enden der Leitkufen (7; 7') und der zugeordneten Rampen (11; 11') ein Dreieck aufspannen.

4. Vorrichtung nach einem der Ansprüche 1 bis 3, **dadurch gekennzeichnet, dass** die miteinander verbundenen Enden der Leitkufen (7, 7') und der Rampen (11, 11') gegenüber einem freien Ende der auf derselben Seite angeordneten Rampe (14, 14') einen Isolierabstand aufweisen.

5. Vorrichtung nach einem der Ansprüche 1 bis 4, **dadurch gekennzeichnet, dass** die Isolierprofile (5, 6) jeweils über ein elektrisch leitfähiges Profil, insbesondere ein Doppel-T-Profil (25) mit der zugeordneten Stromschiene (1, 2) verbunden sind.

6. Vorrichtung nach Anspruch 5, **dadurch gekennzeichnet, dass** die Leitkufen (7, 7') über das Profil (25) elektrisch und mechanisch mit der zugeordneten Stromschiene (1, 2) verbunden sind.

7. Vorrichtung nach einem der Ansprüche 1 bis 6, **dadurch gekennzeichnet, dass** die Leitkufen (7, 7') in Draufsicht das zugeordnete Isolierprofil (5, 6) queren und an dieser Stelle eine Aussparung (26) aufweisen zur Bildung eines Luftspaltes zwischen der Leitkufe (7, 7') und dem entsprechenden Isolierprofil (5, 6).

8. Vorrichtung nach einem der Ansprüche 1 bis 7, **dadurch gekennzeichnet, dass** die Leitkufen (7, 7') die Rampen (11, 11') und die Isolierkufen (14, 14') eine solche Höhe aufweisen, dass sie in ihrer Längsrichtung biegesteif sind.

9. Vorrichtung nach einem der Ansprüche 1 bis 8, **dadurch gekennzeichnet, dass** die Isolierprofile (5, 6) durch elektrisch isolierendes Material gebildet sind, die durch kurze Distanzstücke (30, 33) an dem Profil (25), insbesondere dem Doppel-T-Profil (25), angeschraubt sind.

10. Vorrichtung nach Anspruch 9, **dadurch gekennzeichnet, dass** ein erstes Distanzstück (30) an einem horizontalen Schenkel (22) des Doppel-T-Profiles (25) und das andere Distanzstück (33) an einem vertikalen Schenkel (24) des Doppel-T-Profils (21) angeschraubt ist.

## Claims

1. A device having two rigid conductor rails and a section insulator, wherein opposing ends of the conductor rails have a first spacing (4) relative to one another, which spacing (4) is bridged by the section insulator, wherein each conductor rail (1, 2) is connected directly or indirectly to a conductive runner (7, 7'), a ramp (11, 11') and an insulating runner (14, 14'), which project into the spacing (4) and are disposed in mirror symmetry relative to a center longitudinal axis (3) of the conductor rails (1, 2) and relative to a vertical transverse plane,
wherein both conductor rails (1, 2) are rigidly connected to one another by straight-line insulating profiles (5, 6) bridging the spacing (4), **characterized in that**
the insulating runners (14, 14') are fastened to the insulating profiles and extend at an acute angle relative to the center longitudinal axis (3),
**in that** one end of the conductive runners (7, 7') is electrically and mechanically connected to the associated conductor rail (1, 2) and the other end to the associated ramp (11, 11'),
**in that** the conductive runners (7, 7'), starting from the associated conductor rail (1, 2), extend in a first section (8) in the longitudinal direction of the conductor rails (1, 2) and in a second section (9) diagonally outward, and the free end (10) thereof is connected to a first free end of the associated ramp (11, 11'), and
**in that** a second end of the ramp (11, 11') is connected to the associated conductor rail (1, 2).

2. The device according to Claim 1, **characterized in that** the conductive runners (7, 7') and the ramps (11, 11') in the direction of the center longitudinal axis (3) overlap in an overlap area (16), the insulating runners (14, 14') projecting into the overlap area (16).

3. The device according to Claim 1 or 2, **characterized in that** the ends of the conductive runners (7, 7') and the associated ramps (11; 11') form a triangle.

4. The device according to Claims 1 to 3, **characterized in that** the ends of the conductive runners (7, 7') connected to one another and of the ramps (11, 11') have an insulating spacing relative to a free end of the ramps (14, 14') disposed on the same side.

5. The device according to one of Claims 1 to 4, **characterized in that** each of the insulating profiles (5, 6) is connected to the associated conductor rail (1, 2) via an electrically conductive profile, in particular, a double-T profile (25).

6. The device according to Claim 5, **characterized in that** the conductive runners (7, 7') are electrically and mechanically connected to the associated conductor rail (1, 2) via the profile (25).

7. The device according to one of Claims 1 to 6, **characterized in that** in top view the conductive runners (7, 7') cross the associated insulating profile (5, 6) and at this point have a recess (26) for forming an air gap between the conductive runners (7, 7') and the corresponding insulating profile (5, 6).

8. The device according to one of Claims 1 to 7, **characterized in that** the conductive runners (7, 7'), the ramps (11, 11') and the insulating runners (14, 14') are of such a height that they are rigid in their longitudinal direction.

9. The device according to one of Claims 1 to 8, **characterized in that** the insulating profiles (5, 6) are formed by an electrically insulating material, and are screwed through short spacers (30, 33) to the profile (25), in particular the double-T profile (25).

10. The device according to Claim 9, **characterized in that** a first spacer (30) is screwed to a horizontal section (22) of the double-T profile (25) and the other spacer (33) is screwed to a vertical section (24) of the double-T profile (21).

## Revendications

1. Dispositif avec deux rails conducteurs rigedes et un séparateur de voies, dans lequel les extrémités des rails conducteurs en opposition l'une de l'autre sont séparées l'une de l'autre par un premier espace (4), lequel espace (4) est pontépar le séparateur de voies, dans lequel chaque rail conducteur (1, 2) est relié directement ou indirectement avec un patin de guidage (7, 7'), une rampe (11, 11') et un patin isolant (14, 14'), lesquels font saillie dans ledit espace (4) et sont disposés de façon symétrique par rapport à un axe central longitudinal (3) des rails conducteurs (1, 2) et par rapport à un plan transversal vertical, dans lequel les deux rails conducteurs (1, 2) sont rigidement reliés l'un à l'autre par des profilés isolants (5, 6) rectilignes pontant le premier espace (4), **caractérisé en ce que**,
les patins isolants (14, 14') sont fixés sur les profilés isolants et s'étendent selon un angle aigu par rapport à un axe central longitudinal (3),
les patins de guidage (7, 7') sont reliésélectriquement et mécaniquement par une extrémité au rail conducteur (1, 2) associé et par leur autre extrémité à la rampe (11, 11') associée,
les patins de guidage (7, 7') s'étendent, à partir du rail conducteur associé (1, 2), selon un premiertronçon (8) dans la direction longitudinale des rails conducteurs (1, 2) et, selon un deuxième tronçon (9) obliquement vers l'extérieur et leur extrémité libre (10) est reliée à une première extrémité libre de la rampe associée (11,11'), et
unedeuxième extrémité de la rampe (11, 11') est reliée au rail conducteur associé (1, 2).

2. Dispositif selon la revendication 1, **caractérisé en ce que**, les patins de guidage (7, 7') et les rampes (11, 11') se chevauchent dans une zone de chevauchement (16) dans la direction de l'axe central longitudinal (3), dans lequel les patins isolants (14,14') font sailliedans la zone de chevauchement (16).

3. Dispositif selon la revendication 1 ou 2, **caractérisé en ce que** les extrémités des patins de guidage (7, 7') et des rampes associées (11, 11') forment un triangle.

4. Dispositif selon l'une des revendications 1 à 3, **caractérisé en ce que** les dites extrémités reliées des patins de guidage (7, 7') et des rampes (11, 11')présentent une distance d'isolation par rapport à une extrémité libre de la rampe (14, 14')qui est disposée sur le même côté.

5. Dispositif selon l'une des revendications 1 à 4, **caractérisé en ce que** les profilés isolants (5, 6) sont reliés chacun au rail conducteur (1, 2) associépar l'intermédiaire d'un profilé conducteur d'électricité, en particulier un double profilé en T (25).

6. Dispositif selon la revendication 5, **caractérisé en ce que** les patins de guidage (7, 7') sont reliésélectroniquement et mécaniquement au rail conducteur (1, 2) associé par l'intermédiaire du profilé (25).

7. Dispositif selon l'une des revendications 1 à 6, **caractérisé en ce que** vu de dessus les patins de guidage (7, 7') traversent le profilé isolant associé (5, 6) et dans cette configuration présentent un évidement (26) pour créer un espace d'air entre le patin de guidage (7, 7') et le profilé isolant (5, 6) correspondant.

8. Dispositif selon l'une des revendications 1 à 7, **caractérisé en ce que** les patins de guidage (7, 7'), les rampes (11, 11') et les patins isolants (14, 14') présentent une hauteur telle, qu'ils sont résistants en flexion dans leur direction longitudinale.

9. Dispositif selon l'une des revendications 1 à 8, **caractérisé en ce que** les profilés isolants (5, 6) sont formés avec un matériau isolant électriquement, lesquels sont vissés par des entretoises courtes (30, 33) sur le profilé (25), en particulier sur le double profiléen T (25).

10. Dispositif selon la revendication 9, **caractérisé en ce qu'**une première entretoise (30) est vissée sur une branche horizontale (22) du double profiléen T (25) et une autre entretoise (33) est vissée sur une branche verticale (24) du double profiléen T (21).
